# FASCICULE DE BREVET EUROPEEN

(11) **EP 0 424 827 B1**
(45) Date de publication et mention de la délivrance du brevet: **01.12.1993**
(21) Numéro de dépôt: 90120130.1
(22) Date de dépôt: 19.10.1990
(51) Int. Cl.: H01M 6/18, H01B 1/12, C08L 63/00

(54) **Electrolyte solide polymère réticulé**
Vernetzter fester Polymerelektrolyt
Cross-linked polymeric electrolyte

(30) Priorité: 26.10.1989 FR 8914061
(43) Date de publication de la demande: 02.05.1991
(73) Titulaire: ALCATEL ALSTHOM COMPAGNIE GENERALE D'ELECTRICITE, 75382 Paris Cédex 08 (FR)
(72) Inventeur: Andrieu, Xavier, F-91220 Bretigny sur Orge (FR); Boeuve, Jean-Pierre, F-91460 Marcoussis (FR)
(74) Mandataire: Weinmiller, Jürgen

(56) Documents cités:
- EP-A- 0 037 776
- EP-A- 0 083 813
- EP-A- 0 249 940
- DE-A- 1 907 620
- FR-A- 2 593 328
- US-A- 4 654 279

## Description

La présente invention concerne un électrolyte solide polymère réticulé.

Les électrolytes solides polymères classiques à base de polyéthylène oxyde (PEO) ou de polypropylène oxyde (PPO) ont une conductivité ionique à température ambiante faible (10⁻⁷ S/cm). Seule la phase amorphe assure la conduction et cette dernière n'est réellement bonne qu'au delà de la température de fusion du polymère. Il est possible en diminuant la température de transition vitreuse du polymère, en supprimant les zones cristallines et en utilisant des masses moléculaires plus faibles, d'augmenter la conduction ionique. La contre partie de ces améliorations est souvent une forte dégradation des propriétés mécaniques.

La réticulation des polymères conducteurs peut augmenter la solidité des films mais cela se traduit par une baisse de la conductivité.

On connaît par ailleurs des électrolytes solides polymères incorporant des plastifiants.

Dans l'article de P.M. Blonsky et D.F. Shriver, J. Am. Chem. Soc. 1984.106, pages 6854-55, il est décrit un polymère de type poly(bis(méthoxy éthoxy)phosphazène) qui incorpore de courtes chaînes de PEO dont la conductivité ionique à 25°C dépasse 10⁻⁵ S/cm. La stabilité électrochimique de ce nouveau composé ainsi que ses propriétés mécaniques sont limitées.

Bauer et al décrivent dans le brevet US-A-4 654 279 un électrolyte solide polymère constitué de deux phases interpénétrées : une phase solide inerte réticulée et une phase liquide polymère (polyéther de faible masse) de bonne conductivité ionique (>;10⁻⁴ S/cm). Les proportions relatives de la phase réticulée et du liquide sont choisies de façon à combiner les bonnes propriétés mécaniques et électrochimiques. La conductivité ionique de cet électrolyte est de l'ordre de 10⁻⁴ S/cm à température ambiante.

Dans le brevet US-A-4 792 504 de G. Schwab et M.T. Lee est divulgué un électrolyte solide dont la matrice supportant la phase liquide est constituée de PEO réticulé par un composé de type polyacrylate. Le liquide, dans lequel est dissout un sel métallique, est un polyéther de faible masse moléculaire ou un solvant aprotique.

Dans le brevet EP-A-037 776 on décrit un électrolyte solide polymère réticulé comportant un polyéther à fonctions amines réticulées par un composé durcisseur pouvant comporter deux fonctions époxy. Cet électrolyte ne peut être utilisé convenablement, c'est-à-dire avec une conductivité ionique suffisante, qu'à une température élevée, de l'ordre de 70°C à 100°C.

La présente invention a pour but de réaliser un électrolyte solide polymère réticulé, présentant une bonne résistance mécanique, incorporant ou non un plastifiant et présentant dans les deux cas une conductivité ionique supérieure à celle des électrolytes connus.

La présente invention a pour objet un électrolyte solide polymère réticulé, comportant un polyéther à fonctions amines réticulées par un composé durcisseur comportant deux fonctions époxy, caractérisé par le fait que lesdites fonctions amines sont deux fonctions terminales pour définir ainsi un réseau tridimensionnel qui complexe un sel ionisable de formule M⁺X⁻, M⁺ étant choisi parmi Li⁺, Na⁺, K⁺, Ca²⁺, NH⁴⁺, X⁻ étant choisi parmi ClO₄⁻, CF₃SO₃⁻, SCN⁻, BF₄⁻, I⁻, Br⁻, N₃⁻, BH₄⁻, CF₃CO₃⁻, AsF₆⁻, PF₆⁻, la proportion pondérale dudit sel dans l'électrolyte étant comprise entre 5 % et 40 %.

Ledit polyéther est choisi parmi un polyéthylène oxyde, un polypropylène oxyde, un copolymère statistique des deux précédents, alterné, séquencé ou greffé de polyéthers. Sa proportion pondérale peut aller jusqu'à 80 %.
Sa masse moléculaire est comprise entre 300 et 100 000.

Le composé durcisseur peut être de type diglycidyl, une résine polyépoxyde, ou un polyéther à deux fonctions époxy terminales. De préférence la proportion de ce composé durcisseur est choisi de façon que le rapport époxy/amine soit compris entre 0,5 et 5.
De telles proportions permettent d'obtenir le meilleur compromis entre les propriétés mécaniques et électrochimiques.

Les fonctions amines du polyéther réagissent avec les groupements époxy qui s'ouvrent. Les fonctions amines secondaires formées peuvent réagir à leur tour avec des époxy. Cet ensemble de réactions assure la formation du réseau tridimensionnel et la réticulation. La taille minimale du réseau réticulé est fixée par la longueur de chaîne de la résine polyéther utilisée.

L'électrolyte selon l'invention peut comporter en outre un plastifiant non réactif compatible avec le polyéther, présentant une forte constante diélectrique et une faible tension de vapeur. Il peut être un solvant aprotique dipolaire (carbonate de propylène, carbonate d'éthylène, g-butyrolactone,...), un glyme (tétraglyme, hexaglyme,...), ou un diméthyléther de glycol (polyéthylèneglycol diméthyléther...). Il peut être aussi un mélange de plusieurs solvants. Le polymère réticulé peut comprendre jusqu'à 80 % de solvant.

La réticulation du polyéther se fait en présence du plastifiant et peut être initiée thermiquement.

Selon un mode de réalisation préférentiel, ledit électrolyte comprend un plastifiant réactif. Il s'agit d'un polyéther comportant une seule fonction époxy terminale. On réalise ainsi un système à chaînes pendantes.
Ce polyéther est choisi parmi un polyéthylène oxyde, un polypropylène oxyde, un copolymère statistique des deux précédents, alterné, séquencé ou greffé de polyéthers. Sa masse moléculaire est comprise entre 300 et 10 000. La réticulation du polyéther de base se fait en présence du plastifiant réactif et peut être initiée thermiquement.

L'électrolyte selon l'invention, solide, polymère réticulable, plastifiable, de conductivité ionique élevée et présentant une bonne tenue mécanique, peut être utilisé dans des générateurs électrochimiques primaires et secondaires, des supercondensateurs à double couche électrochimique, des afficheurs électrochromes, et toutes les applications de la microionique faisant appel aux électrolytes solides.

D'autres caractéristiques et avantages de la présente invention apparaîtront au cours de la description suivante de modes de réalisation donnés à titre illustratif mais nullement limitatif.

### Exemple 1

On dissout dans 10 cm³ d'acétonitrile à 25°C :
- 0,5 g de polyoxyéthylène (5000) bis(amine) de la Société Aldrich
- 0,1 g de LiClO₄
- 10 µl d'éthylène glycol diglycidyléther comme durcisseur.

Après dissolution complète, le mélange est coulé dans un moule, puis le solvant est évaporé sous vide. Le film obtenu est réticulé 4 heures à 100°C et séché à la même température 15 heures sous vide primaire.

La conductivité ionique de ce film, mesurée entre deux électrodes de nickel à 25°C par impédance complexe, est de 9.10⁻⁶ S/cm.

### Exemple 2

On réalise suivant la procédure de l'exemple 1 un électrolyte contenant:
- 2 g de O,O′-bis-(2-aminopropyl)-polyéthylène glycol 1900 vendu sous la marque Jeffamine ED2001 de Texaco
- 0,4 g de LiClO₄
- 1 g de résine polyépoxyde vendu sous la marque AW106 de Ciba Geigy.

La conductivité ionique mesurée à 25°C sur ce film est de 10⁻⁶ S/cm.

Les deux exemples précédents montrent une conductivité améliorée vis à vis de celle des électrolytes solides classiques sans plastifiant.

### Exemple 3

On réalise le mélange suivant :
- 0,5 g de polyoxyéthylène (20000)bis(amine) de la Société Aldrich
- 0,1 g de LiClO₄
- 15 µl d'éthylène glycol diglycidyléther comme durcisseur
- 0,7 g de carbonate de propylène comme plastifiant non réactif.

Après homogénéisation complète la résine est coulée dans un moule puis réticulée pendant 16 heures à 70°C.

La conductivité ionique mesurée à 25°C sur ce film est de 1,2.10⁻³ S/cm.

### Exemple 4

On réalise suivant la procédure de l'exemple 3 un électrolyte contenant:
- 1,5 g de O,O′-bis-(2-aminopropyl)-polyéthylène glycol 1900 vendu sous la marque Jeffamine ED2001 de Texaco
- 0,3 g de LiClO₄
- 0,3 g d'éthylène glycol diglycidyléther comme durcisseur
- 2,6 g de carbonate de propylène comme plastifiant non réactif.

La conductivité ionique mesurée à 25°C sur ce film est de 10⁻³ S/cm.

Les exemples 3 et 4 montrent une conductivité améliorée vis à vis de celle des électrolytes connus comprenant un plastifiant.

Bien entendu l'invention n'est pas limitée aux exemples décrits. On pourra, sans sortir du cadre de l'invention remplacer tout moyen par un moyen équivalent.

## Revendications

1. Electrolyte solide polymère réticulé comportant un polyéther à fonctions amines, réticulées par un composé durcisseur comportant deux fonctions époxy, caractérisé par le fait que lesdites fonctions amines sont deux fonctions terminales pour définir ainsi un réseau tridimensionnel qui complexe un sel ionisable de formule M⁺X⁻, M⁺ étant choisi parmi Li⁺, Na⁺, K⁺, Ca²⁺, NH⁴⁺, X⁻ étant choisi parmi ClO₄⁻, CF₃SO₃⁻, SCN⁻, BF₄⁻, I⁻, Br⁻, N₃⁻, BH₄⁻, CF₃CO₃⁻, AsF₆⁻, PF₆⁻, la proportion pondérale dudit sel dans l'électrolyte étant comprise entre 5 % et 40 %.

2. Electrolyte selon la revendication 1, caractérisé par le fait que ledit polyéther est choisi parmi un polyéthylène oxyde, un polypropylène oxyde, un copolymère statistique des deux précédents, alterné, séquencé ou greffé de polyéthers.

3. Electrolyte selon l'une des revendications 1 et 2, caractérisé par le fait que la masse moléculaire dudit polyéther est comprise entre 300 et 100 000.

4. Electrolyte selon l'une des revendications 1 à 3, caractérisé par le fait que la proportion dudit composé durcisseur est choisie de façon que le rapport époxy/amine soit compris entre 0,5 et 5.

5. Electrolyte selon l'une des revendications précédentes, caractérisé par le fait que ledit composé durcisseur est de type diglycidyl.

6. Electrolyte selon l'une des revendications 1 à 4, caractérisé par le fait que ledit composé durcisseur est une résine polyépoxyde.

7. Electrolyte selon l'une des des revendications 1 à 4, caractérisé par le fait que ledit composé durcisseur est un polyéther à deux fonctions époxy terminales.

8. Electrolyte selon l'une des revendications précédentes, caractérisé par le fait qu'il comporte en outre un plastifiant non réactif, choisi parmi les solvants aprotiques dipolaires à faible tension de vapeur, les glymes, les diméthyéthers de glycol et leurs mélanges.

9. Electrolyte selon l'une des revendications 1 à 7, caractérisé par le fait qu'il comporte en outre un plastifiant réactif constitué par un polyéther comportant une seule fonction epoxy terminale.

10. Electrolyte selon la revendication 9, caractérisé par le fait que ledit polyéther comportant une seule fonction amine ou époxy terminale est choisi parmi un polyéthylène oxyde, un polypropylène oxyde, un copolymère statistique des deux précédents, alterné, séquencé ou greffé de polyéthers.

11. Electrolyte selon l'une des revendications 9 et 10, caractérisé par le fait que la masse moléculaire dudit plastifiant réactif est comprise entre 300 et 10 000.

## Claims

1. A cross-linked polymer solid electrolyte comprising a polyether having amine functions cross-linked by a curing compound including two epoxy functions, the electrolyte being characterized by the fact that said amine functions are two terminal functions, thereby defining a three-dimensional lattice which complexes an ionizable salt of the formula M⁺X⁻, where M⁺ is selected from Li⁺, Na⁺, K⁺,Ca²⁺, and NH⁴⁺, and X⁻ is selected from ClO₄⁻, CF₃SO₃⁻, SCN⁻, BF₄⁻, I⁻, Br⁻, N₃⁻, BH₄⁻, CF₃CO₃⁻, AsF₆⁻, and PF₆⁻, the proportion by weight of said salt in the electrolyte lying in the range 5% to 40%.

2. An electrolyte according to claim 1, characterized by the fact that said polyether is selected from a polyethylene oxide, a polypropylene oxide, a statistical copolymer thereof, alternated, block sequenced, or grafted by polyethers.

3. An electrolyte according to claim 1 or 2, characterized by the fact that the molecular mass of said polyether lies in the range 300 to 100,000.

4. An electrolyte according to any one of claims 1 to 3, characterized by the fact that the proportion of said curing compound is selected so that the epoxy/amine ratio lies in the range 0.5 to 5.

5. An electrolyte according to any preceding claim, characterized by the fact that said curing compound is of the diglycidyl type.

6. An electrolyte according to any one of claims 1 to 4, characterized by the fact that said curing compound is a polyepoxy resin.

7. An electrolyte according to any one of claims 1 to 4, characterized by the fact that said curing compound is a polyether having two terminal epoxy functions.

8. An electrolyte according to any preceding claim, characterized by the fact that it further includes a non-reactive plasticizing agent selected from dipolar aprotic solvents having low vapor pressure, glymes, glycol dimethyl ethers, and mixtures thereof.

9. An electrolyte according to any one of claims 1 to 7, characterized in that it further includes a reactive plasticizing agent constituted by a polyether having a single terminal amine or epoxy function.

10. An electrolyte according to claim 9, characterized by the fact that said polyether having a single terminal epoxy or amine function is selected from a polyethylene oxide, a polypropylene oxide, a statistical copolymer thereof, alternated, block sequenced, or grafted by polyethers.

11. An electrolyte according to claim 9 or 10, characterized by the fact that the molecular mass of said reactive plasticizing agent lies in the range 300 to 10,000.

## Patentansprüche

1. Vernetzter Polymer-Feststoffelektrolyt mit einem Polyäther, der zwei Aminfunktionen besitzt, die durch einen zwei Epoxyfunktionen enthaltenden Harter vernetzt sind, dadurch gekennzeichnet, daß die Aminfunktionen zwei Endfunktionen sind, um so ein dreidimensionales Gitter zu definieren, das ein ionisierbares Salz der Formel M⁺X⁻ komplexiert, wobei M⁺ aus Li⁺ , Na⁺, K⁺, Ca²⁺, NH⁴⁺ ausgewählt wird, während X⁻ aus ClO₄⁻, CF₃SO₃⁻, SCN⁻, BF₄⁻, I⁻, Br⁻, N₃⁻, BH₄⁻, CF₃CO₃⁻, AsF₆⁻, PF₆⁻ ausgewählt wird, wobei der Gewichtsanteil des Salzes im Elektrolyten zwischen 5% und 40% beträgt.

2. Elektrolyt nach Anspruch 1, dadurch gekennzeichnet, daß der Polyäther ausgewählt wird aus Polyäthylenoxid, Polypropylenoxid, einem statistischen Kopolymer dieser beiden Stoffe, abwechselnd, gefolgt oder veredelt mit Polyäthern.

3. Elektrolyt nach einem der Ansprüche 1 und 2, dadurch gekennzeichnet, daß die Molekularmasse des Polyäthers zwischen 300 und 100.000 liegt.

4. Elektrolyt nach einem der Ansprüche 1 bis 3, dadurch gekennzeichnet, daß der Anteil an Harter so gewählt ist, daß das Verhältnis zwischen Epoxy und Amin zwischen 0,5 und 5 liegt.

5. Elektrolyt nach einem der vorhergehenden Ansprüche, dadurch gekennzeichnet, daß der Härter vom Diglycidyltyp ist.

6. Elektrolyt nach einem der Ansprüche 1 bis 4, dadurch gekennzeichnet, daß der Härter ein Polyepoxidharz ist.

7. Elektrolyt nach einem der Ansprüche 1 bis 4, dadurch gekennzeichnet, daß der Härter ein Polyäther mit zwei Epoxyendfunktionen ist.

8. Elektrolyt nach einem der vorhergehenden Ansprüche, dadurch gekennzeichnet, daß er außerdem einen nicht reaktiven Weichmacher enthält, der unter den dipolaren aprotischen Lösungsmittel mit niedriger Dampfspannung, den Glymen, den Glykol-Dimethyläthern und ihren Mischungen ausgewählt wird.

9. Elektrolyt nach einem der Ansprüche 1 bis 7, dadurch gekennzeichnet, daß er außerdem einen reaktiven Weichmacher enthält, der von einem eine einzige Epoxyendfunktion enthaltenden Polyäther gebildet wird.

10. Elektrolyt nach Anspruch 9, dadurch gekennzeichnet, daß der Polyäther, der nur eine Amin- oder Epoxyendfunktion besitzt, ausgewählt wird aus einem Polyäthylenoxid, einem Polypropylenoxid, einem statistischen Kopolymer dieser Stoffe, abwechselnd, gefolgt oder veredelt mit Polyäthern.

11. Elektrolyt nach einem der Ansprüche 9 und 10, dadurch gekennzeichnet, daß die Molekularmasse des reaktiven Weichmachers zwischen 300 und 10.000 liegt.
